# EUROPEAN PATENT APPLICATION

(11) **EP 4 601 161 A1**
(43) Date of publication of application: **13.08.2025**
(21) Application number: 24156147.1
(22) Date of filing: 06.02.2024
(51) Int. Cl.: H02K 1/18, H02K 11/225, H02K 24/00, H02K 5/24

(54) **STATOR PLATE, STATOR ASSEMBLY, RESOLVER, AND A KIT FOR ASSEMBLY OF A RESOLVER**

(71) Applicant: TE Connectivity Belgium B.V., 8020 Oostkamp (BE)
(72) Inventor: OCKET, Tom, 8020 Oostkamp (BE)
(74) Representative: Grünecker Patent- und Rechtsanwälte PartG mbB

(57) **Abstract**

A stator plate (120) is disclosed, including a plurality of openings (150a, 150b, 150c, 150x, 150y) for insertion of fasteners, for fixing a respective portion (160a, 160b, 160c, 160x, 160y) of the stator plate (120) to an electrical device. The openings (150a, 150b, 150c, 150x, 150y) are selectable, depending on the speed configuration, and include a first set (150b, 150c, 150x) configured for a first speed configuration (300a), and a second set (150a, 150b, 150c) configured for a second speed configuration (300b). The first and second sets are different from each other. The first set (150b, 150c, 150x) can be for a three lobed rotor (210a) and the second set (150a, 150b, 150c) can be for a four lobed rotor (210b).

## Description

Stator plates and assemblies of stator plates are used in electrical devices such as resolvers, for measuring the angular position of a rotor. Stacks of stator plates are often assembled from stamped ferromagnetic steel plates and are attached to other components, such as electrical windings and/or electrical devices that include a rotating mechanism. For example, a stator assembly for a resolver, including a stack of stator plates, can be attached to an electrical motor for determining the angular position and/or rotational speed. Electromagnetic fields can be generated and/or detected by windings of the stator as they are modulated by the position and movement of lobes of the rotor within an aperture of the stator. The magnetic reluctance in the vicinity of the windings changes with the rotation of the rotor, which has radially projecting lobes. Electromagnetic fields can be generated and/or detected by windings of the stator.

Resolvers are often manufactured/provided as multispeed devices. A single speed device, e.g. a single speed reluctance resolver, is one in which the full mechanical 360° rotation of the rotor of the device generates one full cycle (360°) in the electrical output. A two speed device, generates two cycles of electrical output (720°) for one mechanical turn through 360°. For an N-speed electrical device, such as an N-speed resolver, a mechanical rotation of (360°/N) will generate a full electrical cycle of 360°. Three, four, and higher speed devices (e.g. three or four or more speed reluctance resolvers) find applications in many devices that use rotating components.

Stator plates are often used in stator assemblies and/or resolvers, any of which may be provided to manufacturers of machines that utilize rotating components, e.g. electric drive trains or electric vehicles. There is a desire to keep manufacturing costs low, and/or to simplify assembly and/or disassembly procedures.

There is a need for stator assemblies, stator plates, and resolvers that can provide reliable and/or predictable electromagnetic field geometries for the accurate measurement of the angular position of a rotor. Alternatively/additionally, there is a need for stator plates, assemblies, and resolvers that are accurate at wide temperature ranges and/or in combination with electrical devices of different materials, which may have different thermal expansion coefficients. Alternatively/additionally, there is a desire for stator plates, assemblies, and resolvers that can work with a variety of types of rotors, e.g. rotors having different numbers of lobes. Alternatively/additionally, there is a desire for components, such as stator plates, stator plate assemblies, and resolvers, which can be used in multiple configurations. Components that allow users freedom to make changes to the design in order to make a wider range of electrical devices are highly desired. For example, it is convenient to be able to configure a stator or stator assembly to work as a three or four speed resolver (with three or four electrical cycles of output per mechanical revolution of the rotor). It is desirable to use the same component, such as the same stator, to make a multispeed device, such as a multispeed resolver, having a desired speed (e.g. three or four speed).

Thermal expansion of components, such as stator plates, may also influence the electromagnetic signals picked up at the stator windings. Perturbations to the geometry of the stator relative to the rotor, e.g. due to thermal effects, can affect the electromagnetic fields (e.g. the coupling of the electromagnetic fields with the rotor and/or windings) at the stator which are used for the determination of angular position and/or rotational speed. Such perturbations can introduce error in the determination of angular position and/or speed. It is desirable to minimize mechanical distortions of the stator plate, such as those which may be due to mechanical stress, which in turn may be traced back to thermally induced stress.

For example, the fastening of the stator plate to other components of the stator assembly or device may induce stress, particularly when the attachment is to a material with a different coefficient of thermal expansion.

Herein is disclosed a stator plate and stator plate assembly that can be used, selectably, in at least a first speed configuration or a second speed configuration. For example, a stator plate is disclosed that can work with different types of rotors, e.g. rotors that have a variable number of lobes, such as three or four. At least one of the first speed configuration and the second speed configuration may be an odd-number speed configuration. Preferably one of the first and the second speed configuration is an odd-number speed configuration and the other one of the first and the second speed configuration is an even-number speed configuration.

A stator plate, as disclosed herein, can include a plurality of openings for insertion of fasteners, for fixing respective portions of the stator plate to an electrical device. The openings are selectable, depending on the speed configuration. The openings include: a first set configured for a first speed configuration, and a second set configured for a second speed configuration. The first and second sets are different from each other. Each of the stator plates disclosed herein can be used in different speed configurations (e.g. the first configuration can be a three, five, or seven speed configuration, and the second configuration can be a two, four, six, or eight speed; in an embodiment, the first is a three speed and the second is a four speed configuration).

The stator plates described herein can allow more accurate determination of angular position/speed of a rotor. Alternatively/additionally, components such as stator plates that can allow users freedom to make changes to the design in order to make a wider range of electrical devices are highly desirable.

For example, openings are selected for fastening the stator plate in such a way as to selectively minimize thermally induced geometric distortions to the stator, and the electromagnetic fields used for determining the angular position and/or speed of the rotor, in accordance with the speed configuration (e.g. three or four speed). The end-user can choose the configuration (e.g. the desired speed of the reluctance resolver), and select the openings for fastening of the stator plate(s) accordingly. Alternatively or additionally, the portions selected for fixing, e.g. by fasteners inserted in respective openings, can affect the symmetry of thermally induced distortions to the stator so as to reduce the error of angular measurements when the stator is used in a first or second speed configuration.

The stator plate can include the following further developments and/or embodiments, which can be combined singly or multiply, independently of each other unless indicated otherwise, for further embodiments. The invention is defined by the claims.

The stator plates described herein can reduce manufacturing costs and/or errors by utilizing fewer openings for fasteners.

In an embodiment that can be combined with any embodiment of stator plate described herein, the stator plate includes teeth for supporting windings. There can be a first windings configuration and a second windings configuration. The first windings configuration can be for the first speed configuration and the second windings configuration can be for the second speed configuration. The stator plates described herein can allow users flexibility in designing electrical devices, such as reluctance resolvers of selectable speed.

A stator plate can include an aperture that receives a selected rotor. The openings for insertion of fasteners that fix a respective portion of the stator plate to an electrical device can be selectable for accommodating a selected rotor in the aperture. The first set of openings can be for accommodating a first rotor, and the second set can be for accommodating a second rotor. The first and second rotors can have a different number of lobes. A stator plate configured for use with various rotors can simplify manufacturing. For example, the costs of manufacturing stator plates for two separate patterns of stator plates can be reduced to the cost of manufacturing a single pattern of stator plate.

In an embodiment, the stator plate can be used with a three lobed rotor and used with a four lobed rotor. In an embodiment, the first set of openings can be configured for a three lobed rotor, and the second set for a four lobed rotor. Three and four lobed rotors are comparatively common in many types of machines with rotating mechanisms, therefore the availability of a stator plate that can be used with either three or four lobed rotors provides the benefit of scale. The costs of using two designs of stator plates, each separately constructed for either a three or four lobe rotor, for example, can be reduced to using a single design of stator plate.

In an embodiment, the openings include at least one common opening which is included in each of the first set and the second set of openings. The total number of openings and/or fasteners can be kept comparatively low by having common opening(s). Assembly error can be reduced. For example, fewer features are stamped into the plate, and the chance of a defective or mis-stamped feature is reduced. There can be an overall reduced chance of a tool or die breaking during the manufacturing of the plate and causing an assembly error. Alternatively/additionally, having fewer fasteners and/or openings for fasteners can reduce the impact of the fasteners on the magnetic field lines, and may increase the accuracy of the intended electromagnetic interactions between the rotor and the stator.

In an embodiment, the stator plate has at least two common openings which are spaced apart by 120° or less, angularly, e.g. around an aperture of the plate, the aperture for receiving a rotor therein. (For example, two of the openings of the first set of openings are also included in the second set.) Having two or more common openings can further reduce the total number of openings. Assembly error can be reduced. Alternatively/additionally, a maximum angular distance of 120° between openings can reduce the chance of warping/deformation of the plate during use, e.g. by having the fixation points be adequately close together.

In an embodiment, the angular distribution of the openings and/or indicated respective portions is angularly asymmetric around the aperture. The angles between neighboring openings (and/or neighboring respective portions), with respect to a center of the plate and/or aperture, can include a first angle and second angle which are unequal. The angular asymmetry can allow the two sets of openings to be configured for the stator plate's use with different kinds of rotors, such as rotors with a variable number of lobes. The asymmetry can also help identify which of the openings are configured for use with any particular rotor and/or resolver speed. This can aid in reducing assembly error when assembling the stator plate, a stator assembly, and/or resolver in cooperation with another electrical device.

In an embodiment, a minimum angle between neighboring openings is 60°, within the angular tolerance described herein. Having a minimum angle between openings can reduce the total number of openings. Assembly error can be reduced, e.g. fewer features are stamped into the plate. There can be an overall reduced chance of a tool or die breaking during the manufacturing of the plate, and causing an assembly error. Alternatively/additionally, having fewer openings for fasteners can reduce the impact of the fasteners on the magnetic field lines, and may increase the accuracy of the intended electromagnetic interactions between the rotor and the stator.

In an embodiment, the openings of the first set are symmetrically positioned, within an angular tolerance, about a virtual reflection plane which is perpendicular to the stator plate and intersects a geometric center of the stator plate and/or an aperture thereof; and the openings of the second set include at least one opening at an intersection, within the angular tolerance, of the virtual reflection plane and the stator plate. This geometry can aid in spreading out the openings angularly, and/or can aid in spreading the stress of fixation around the stator plate rather than having high localized stress. This can aid in reducing error in the angular measurement of the rotor. Alternatively or additionally this geometry or similar geometries described herein can affect the distribution of deformations in such a way that errors of angular measurements of the rotor are reduced.

In an embodiment, the first set of openings has an even number of openings; the openings of the first set are placed at the corners of a virtual rectangle, within the angular tolerance described herein; and at least one opening at the intersection of the plate and reflection plane is one opening. This geometry can aid in spreading out the openings angularly, and/or can aid in spreading the stress of fixation around the stator plate rather than having high localized stress. This can aid in reducing the risk of deformations of the stator plate. There can be exactly one opening at the intersection.

In an embodiment, the openings are holes extending through the stator plate. Holes can allow the use of fasteners, such as bolts, rivets, or screws for fixing the stator plate to other components.

In an embodiment, at least one of the openings is through at least one corresponding ear which projects radially outwardly from a body which surrounds the aperture. Using ears can allow the placement of the fasteners farther from an aperture of the stator plate. This can reduce the chance of deformation of the stator plate near the aperture, where the electromagnetic interaction of the stator and rotor is sensitive. This can reduce perturbations to the electromagnetic fields, e.g. the dynamic electromagnetic field distributions for the determination of the angular position of the rotor. Alternatively/additionally, the placement of the openings for the fasteners farther from the aperture can reduce perturbations of the electromagnetic field by the fasteners.

Herein, a stator plate is disclosed which is configured to be used for at least two speed configurations, e.g. for a resolver. The stator plate can include a plurality of fiducial marks for indicating respective portions of the stator plate for fixing to an electrical device. The respective portions, for fixing, are selectable, dependent on a speed configuration. The fiducial marks and respective portions each include: a first set configured for a first speed configuration, and a second set configured for a second speed configuration. The first and second sets are different. The first speed configuration can be a three speed configuration, a five speed configuration, or a seven speed configuration; and the second speed configuration can be a two speed configuration, or a four speed configuration, or a six speed configuration, or an eight speed configuration. Alternatively/ additionally, the first set is configured for accommodating a first rotor; and the second set is configured for accommodating a second rotor having a different number of lobes than the first rotor. Optionally, the first set is configured for a three lobed rotor and the second set is configured for a four lobed rotor.

The respective portions that are selected for fixing can minimize thermally induced geometric distortions to the stator, and the electromagnetic fields used for determining the angular position and/or speed of the rotor, in accordance with the speed configuration (e.g. three or four speed). The end-user can choose the configuration (e.g. the desired speed of the reluctance resolver), and select the openings for fastening of the stator plate(s) accordingly. Alternatively/additionally, the portions selected for fixing can affect the symmetry of thermally induced distortions to the stator so as to reduce the error of angular measurements when the stator is used in a first or second speed configuration.

The fiducial marks can include at least one common fiducial mark which is included in each of the first set and the second set. Alternatively/additionally, the respective portions can include at least one common respective portion which is included in each of the first set and the second set. If there are two or more of the common fiducial marks and/or respective portions, they can be spaced apart by 120° or less angularly around the center of the stator plate or aperture thereof. Having common portions in the sets of respective portions for fastening can reduce the number of fasteners. This can reduce the impact of the fasteners on the magnetic field lines, and may increase the accuracy of the intended electromagnetic interactions between the rotor and the stator.

The angular distribution of the fiducial marks and/or respective portions can be angularly asymmetric around the center of the stator plate and/or aperture thereof. The angles between neighboring respective portions, with respect to the center of the plate, can include a first angle and second angle which are unequal.

The angular asymmetry can allow the two sets respective positions for fastening to be configured for the stator plate's use with different kinds of rotors, such as rotors with a variable number of lobes. The asymmetry can also help identify which positions are configured for use with any particular rotor and/or resolver speed. This can aid in reducing assembly error when assembling the stator plate, a stator assembly, and/or resolver, e.g. in cooperation with another electrical device.

The openings of the first set of fiducials and/or respective portions can be symmetrically positioned, within the angular tolerance described herein, about a virtual reflection plane which is perpendicular to the stator plate and intersects a geometric center of the stator plate and/or an aperture thereof. The second set of fiducials and/or respective portions can include at least one at an intersection, within the angular tolerance, of the virtual reflection plane and the stator plate. Optionally, the first set has an even number; and the first set is placed at the corners of a virtual rectangle, within the angular tolerance. Optionally, there is exactly one fiducial mark and/or respective portion, for fastening, at the intersection, within the angular tolerance.

The above described geometry can aid in spreading out the fastened positions angularly, and/or can aid in spreading the stress of fixation around the stator plate rather than having high localized stress. This can aid in reducing error in the angular measurement of the rotor. Alternatively or additionally this geometry or similar geometries described herein can affect the distribution of deformations in such a way that errors of angular measurements of the rotor are reduced.

The fiducials and/or respective portions can be on ears which project radially outwardly from the body of the stator plate. Using ears can allow the placement of the fasteners farther from an aperture of the stator plate. This can reduce the chance of deformation of the stator plate near the aperture, where the electromagnetic interaction of the stator and rotor is sensitive. This can reduce perturbations to the electromagnetic fields, e.g. the dynamic electromagnetic field distributions for the determination of the angular position of the rotor. Alternatively/additionally, the placement of the openings for the fasteners farther from the aperture can reduce perturbations of the electromagnetic field by the fasteners.

A stator assembly is disclosed herein, which can include a stack of stator plates, the stator plates being according to any embodiment disclosed herein. The respective portions, for fixing, of the stator plates are aligned. The assembly is configured for at least one of: selectably fixing the first set or the second set of the respective portions to the electrical device; or selectably fixing the first set or the second set of the openings to the electrical device.

A selected rotor can be accommodated in an aligned aperture formed by the apertures of the stacked stator plates. The stator assembly can be used with various rotors. A stator assembly that can be used with various rotors can simplify manufacturing, and/or have the benefit of scale. Costs of using two different assemblies, each accommodating only one kind of rotor, can be reduced by using a single assembly which can be used with more than one kind of rotor. Further developments and/or embodiments can be combined as desired, such as the following.

For example, the optional openings of the stator plates of the stack can be aligned for insertion of fasteners for fixing the respective portion (e.g. an angular portion around the aperture) of the stack to an electrical device. The aligned openings can be selectable for different speed configurations of the assembly. In an embodiment, the stator assembly includes a plurality of fiducial marks for the respective portions and/or openings, configured to indicate at least two attachment configurations, including a configuration for the selected speed, windings configuration, and/or rotor. Fiducial marks and/or indicators can aid in reducing assembly errors.

Herein is disclosed a resolver, including the stator assembly, according to any embodiment described herein. The resolver includes a rotor and a windings configuration. At least one of:
i - the stator assembly is fastened by using one of the first set or the second set of openings; wherein the fastened openings depend on the speed configuration of the resolver; or
ii - the stator assembly is fastened by using one of the first set or the second set of fiducial marks and respective portions; wherein the fastened respective portions depend on the speed configuration of the resolver.

Components can allow users freedom to make changes to the design in order to make a wider range of electrical devices are desirable. The speed configuration can be determined at least partly by selection of a rotor, e.g. a rotor having various numbers of lobes.

A resolver configured for use with various rotors can simplify manufacturing. For example, the costs of manufacturing two different resolvers that use different patterns of stator plates can be reduced to the cost of manufacturing a single pattern of stator plate which is used in one resolver capable of accommodating different kinds of rotors.

Herein is disclosed a kit for assembling a resolver, including a plurality of stator plates as described herein, and at least one rotor. The kit can be assembled as a resolver having a first speed or a second speed (e.g. a three speed resolver or a four speed resolver). At least one of the first or second speed may be an odd number. The stator plates can be configured to be assembled with the at least one rotor for assembling a first speed resolver or a second speed resolver. At least one of: i - the first set of openings are configured to be used for the first speed resolver, and the second set of openings are configured to be used for the second speed resolver; or
ii - the first set of fiducial marks and respective portions are configured to be used for the first speed resolver, and the second set of fiducial marks and respective portions are configured to be used for the second speed resolver.

A kit aids in the flexibility of downstream design of a device that uses a resolver. A manufacturer or user of the kit can adapt the configuration of the resolver according to the immediate needs. Components can allow users freedom to make changes to the design in order to make a wider range of electrical devices are desirable.

The stator plates of the kit can be fixed using fasteners at selected respective portions, e.g. fasteners inserted through a selected set of the openings (e.g. the first or second set), depending on the desired speed of the resolver. The selected fastened respective portions and/or openings can reduce errors in the angle measurement. The kit can include at least one wire for forming a winding configuration, which may depend on the desired speed of the resolver.

The resolver can be attached to an electrical device. The resolver can be configured for determining the angular position of a rotating mechanism of the electrical device; and/or communicative coupling, e.g. to the same or a second electrical device.

Herein "and/or" means at least one of the listed elements. For example, "A and/or B" means: only A; only B, at least A; at least B; or at least A and B. For example, "X, Y, and/or Z" means: only X; only Y; only Z; at least X; at least Y; at least Z; only X and Y; only X and Z; only Y and Z; only X, Y, and Z; at least X and Y; at least X and Z; at least Y and Z; or at least X, Y, and Z. Herein an "(s)" at the end of a word means one or more; for example a hole(s) is one or more holes.

Herein "angular speed" may be used to mean "angular speed and/or angular velocity." Herein the stator plate can be at least partly ferromagnetic, such as ferromagnetic steel, and can be formed by stamping.

Herein, "plate" can be used for "stator plate." The stator plates described herein can be used in resolvers, e.g. in a selectable speed configurations of a resolver. Herein, "variable speed rotors" can mean rotors having different numbers of lobes. Herein selecting can mean using, e.g. using one or more openings, from a group of openings, for fastening the stator plate(s), stator assembly, and/or resolver; alternatively/additionally, selecting may be selecting positions for fasteners and/or fixing means. Herein, a fixing means and/or fastener can be, for example, a bolt, screw, and/or rivet.

Herein an opening can be a round through-hole, a slot, or a notched opening, e.g. at an edge of the stator plate (such as an outer edge of the plate, and/or located radially outwardly from a geometric center of the plate, and/or on the outer periphery of the plate). Herein "different kinds of rotors" can mean rotors having different, numbers of lobes, e.g. three lobed rotors and four lobed rotors. More lobes are possible, such as up to 24, or 6, 8 or 12. Herein, a center of the stator plate can be a centroid and/or center of mass. The center may be at an aperture of the stator plate.

Herein the center, such as the geometric center, of a stator plate can be the geometric center of the aperture of the stator plate.

Herein, the terms "fiducial mark," "fiducial," and "indicator" may be used interchangeably, meaning a marking put on an object such as a stator plate as a reference, e.g. a reference to indicate a position for a fastener.

In the following, the invention is described in more detail by means of embodiments with reference to the attached figures. In the figures, elements which correspond to one another in terms of structure and/or function are provided with the same reference signs.

The combinations of features shown and described in the individual embodiments are for explanatory purposes only. According to the above explanations, a feature of an embodiment can be omitted if its technical effect is not important for a particular application. Conversely, according to the above explanations, a further feature can be added to an embodiment if its technical effect should be advantageous or necessary for a particular application.

In the following, several examples are described.

In the figures:
- Fig. 1: shows a stator assembly, according to embodiments,
- Fig. 2a: shows a resolver, according to embodiments,
- Fig. 2b: shows a resolver, according to embodiments,
- Fig. 3a: shows a three speed resolver scheme, according to embodiments,
- Fig. 3b: shows a four speed resolver scheme, according to embodiments,
- Fig. 4: shows a kit for assembling a resolver, according to embodiments; and
- Fig. 5: shows a stator plate, according to embodiments.

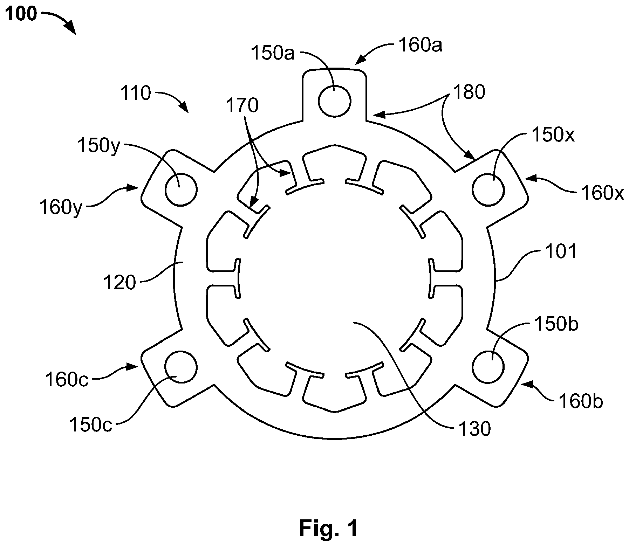

Fig. 1 shows a stator assembly, according to an embodiment. The stator assembly 100 includes a stack 110 of stator plates 120.

A stator plate 120 can include openings 150a, 150b, 150c, 150x, 150y for insertion of fasteners that can fix a respective portion 160a, 160b, 160c, 160x, 160y of the stator plate 120 to an electrical device. The openings 150a, 150b, 150c, 150x, 150y can allow the entire stator plate 120 and/or assembly 100 to be firmly attached to an electrical device, such as a resolver and/or motor. The fasteners at each respective opening 150a, 150b, 150c, 150x, 150y can firmly fix a respective portion 160a, 160b, 160c, 160x, 160y of the plate 120 to the electrical device, e.g. portion of the plate in the vicinity of the corresponding opening for the fastener.

The optional openings 150a, 150b, 150c, 150x, 150y of the stator plate are selectable. The openings 150a, 150b, 150c, 150x, 150y can be selected, e.g. by a user, depending on a desired configuration, e.g. a desired speed of the resulting device. For example, the openings 150a, 150b, 150c, 150x, 150y can be selected to configure the stator plate 120 for a three speed or four speed resolver, e.g. with a three or four lobed rotor, respectively. Other possible configurations are possible, such as five speed or six speed configurations; and possibly an eight speed configuration.

For example, the openings 150a, 150b, 150c, 150x, 150y can be selected for accommodating a selected rotor in the aperture 130, e.g. rotors having various numbers of lobes.

The optional openings 150a, 150b, 150c, 150x, 150y can include a first set 150a, 150b, 150c, 150x, 150y and a second set.

The first set 150b, 150c, 150x, 150y can be configured for a first speed. The second set 150a, 150b, 150c can be configured for a second speed. Alternatively/additionally, the first set 150b, 150c, 150x, 150y can accommodate a first rotor, and the second set 150a, 150b, 150c can accommodate a second rotor which has a different number of lobes than the first.

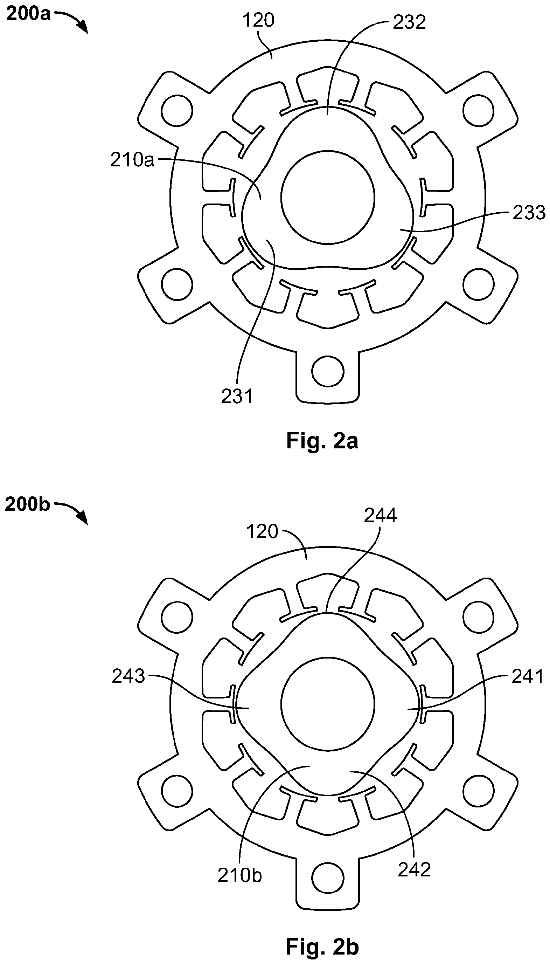

A stator plate 120 can include an aperture 130 for receiving a rotor, as shown for example in Figs. 2a and 2b).

Fig. 2a shows a resolver, according to embodiments. A resolver 200a, for example, can use a three lobed rotor 21 0a, as shown in Fig. 2a. Alternatively/additionally, the resolver 200a can be a three or six speed resolver. The rotor 210a of Fig. 2 has a first lobe 231, second lobe 232, and third lobe 233. The lobes 231, 232, 233 may project out radially, e.g. toward the stator plate 120 which may have an aperture 130 for accepting the rotor 210a therein.

Fig. 2b shows a resolver, according to embodiments. A resolver 200b, for example, can use a four lobed rotor 210b, as shown in Fig. 2b. The rotor 210b can have lobes 241, 242, 243, 244. The lobes 241, 242, 243, 244 may project radially outwardly, e.g. toward the stator plate 120 which may have an aperture 130 for accepting the rotor 210a therein.

The resolver 200b can use the same stator assembly 100 and/or stack of stator plates 120 as shown in Fig. 2a. Alternatively/additionally, the resolver 200b can be a four or eight speed resolver.

The openings 150a, 150b, 150c, 150x, 150y for attachment of the stator plates 110 and/or stator assembly 110 can be selected according to the desired speed configuration and/or selected rotor 210a, 210b. When attaching the stator plates 120, for example, the first set 150b, 150c, 150x, 150y of openings can be selected, e.g. as a three, five, or seven speed configuration, e.g. a three, five, or six speed resolver. The first set 150b, 150c, 150x, 150y of openings, used for fixing the stator plates 120, reduce the deformations of the stator plate 110 along directions that more perturb the electromagnetic fields that are used to determine the rotational position and/or speed of the rotor, in a three, five, or six speed configuration.

The first set 150b, 150c, 150x, 150y of openings can have openings at the corners of a virtual rectangle. For example, for the resolver 200a of Fig. 2a, selecting the openings of the first set 150b, 150c, 150x, 150y for fixation can prevent deformations of the stator plate(s), due to thermal expansion/contraction, from having the same symmetry as the three lobed rotor 210a. The respective portions 160x, 160b, 160c, 160y can be firmly fixed by the fastener at the respective openings of the first set 150b, 150c, 150x, 150y.

Thermally induced deformations of the stator plate 120 may be in or out of alignment with the lobes of the rotor and/or windings of the stator. During rotation of the rotor, the deformations of the stator plate 120 can cause an offset or other error in the electromagnetic signals used for the determination of the angular position and/or speed of the rotor 21 0a. The selected openings, e.g. the first set 150b, 150c, 150x, 150y, can be of a different symmetry than the rotor 210a. The first set 150b, 150c, 150x, 150y of openings for fixation, i.e. chosen for the configuration of the desired device speed and/or desired rotor 210a, can reduce the impact of stator plate deformations on the determination of the angle of the rotor.

For example, when a steel stator plate 120 and/or assembly 100 is attached to an aluminum housing of a motor, e.g. by bolting the assembly to the aluminum housing through selected openings 150, the different thermal expansion coefficients of the materials can cause deformations of the plate(s) 120. The regions of a steel stator plate 120 between the fastened openings 150 may expand/contract differently than the portions 160 of the plate 120 that are directly fixed, through the openings. Regions of the plates near the fastening points are, comparatively, pinned to the aluminum housing. Deformations can be small changes to the geometry of the stator plate 120 due to spatially varying thermal expansion/contraction of the plate 120.

In another example, the stator plate 120, stator plate assembly 110, and/or resolver 200b can be configured for a four or eight speed device (e.g. a four or eight speed resolver), e.g. by selecting a second set 150a, 150b, 150b of openings. For example, a four lobed rotor 210b can be accommodated in the stator plate 120, stator plate assembly 100, and/or resolver 200b; and the second set 150a, 150b, 150c of openings is selected for fixation. When the device is fixed at the respective portions 160a, 160b, 160c of the stator plate 120, the impact of the deformations of the stator plate 120 on the determination of the rotor angle and/or speed are reduced when configured as a four or eight speed device, e.g. with a four lobed rotor 210b.

For example, a second set 150a, 150b, 150c of openings having triangular symmetry can be used with a four lobed rotor 210b. The second set 150a, 150b, 150c can be configured for a four or eight speed configuration.

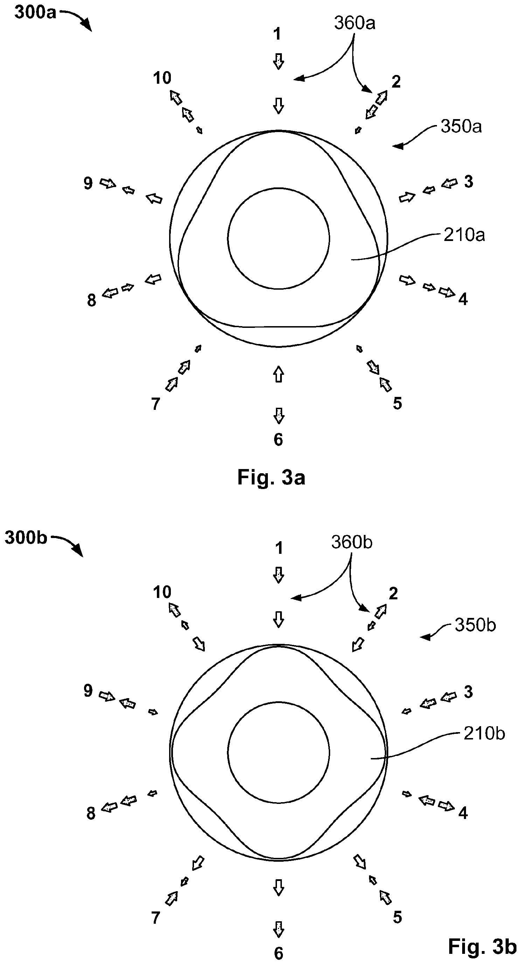

Fig. 3a illustrates a schematic of a three speed resolver.

Fig. 3b illustrates a schematic of a four speed resolver.

Different windings configurations 350a, 350b are illustrated in Figs. 3a and 3b.

As described herein, the same stator plate 120 which can be used for a three speed resolver 300a can also be used for a four speed resolver 300b. The windings configuration 350a of a three speed resolver 300a can be accommodated on the same pattern of stator plate 120 as the windings configuration 350b of a four speed resolver 300b.

The teeth 1, 2, 3,..., 10, of the stator plate 120, shown schematically in Figs. 300a and 300b, can support windings. The windings can be used for generating and/or detecting magnetic fields. Teeth 570 are also shown in Fig. 1, and may extend radially inwardly into an aperture 130 of the stator plate 120.

The vectors (windings 360a, 360b) shown in Fig. 3a and 3b represent windings at the positions of each tooth 1, 2, 3,... 10. For example, the windings 360a for teeth 1 and 2, shown in Fig. 3a, are represented as vectors pointing radially inwardly or outwardly.

The direction of the vectors (windings 360a, 360b) and magnitude of the vectors (windings 360a, 360b) represent the winding direction and number of turns, respectively.

Starting from the outer radial position and going inward, the vectors of Figs. 3a and 3b represent: the primary winding, the COS winding (absent for tooth 1 in Fig. 3a and 3b), and the SIN winding (which is the vector depicted at the innermost position at each tooth 1, 2, 3... 10).

For each of the three speed resolver 300a and the four speed 300b of Figs. 3a and 3b, the primary winding (outermost vector) is wound in the opposite direction at tooth 1 as at tooth 2.

In Fig. 3a, for the three speed resolver 300a, it is also seen that the SIN winding at position 1 has more turns than at position 2, and that the SIN winding has the same direction of winding at positions 1 and 2. At position 3, the SIN winding is wound in the opposite direction as at positions 1 and 2; in Fig. 3a, the vector at position 3 for the SIN winding points radially outwardly, whereas at position 1 and 2, it points radially inwardly.

The magnitude of the vectors illustrate the number of turns of the respective windings at the respective teeth 1, 2, 3, ...10.

The examples of Figs. 3a and 3b show that the primary windings (outermost vector at each tooth position 1, 2, 3, ..., 10) may be the same for the three and four speed resolvers 300a, 300b. However, at tooth 2, the three speed resolver 300a, as shown in Fig 3a, can have more COS turns and fewer SIN turns than the respective COS and SIN windings (at tooth 2) of the four speed resolver 300b, as shown in Fig. 3b.

It is appreciated that the windings configuration 350a of the three speed resolver 300a (Fig. 3a) is different than the windings configuration 350b of the four speed resolver 350b (Fig. 3b). In Fig. 3b, the four speed resolver 300b has a different windings configuration 350b than the three speed resolver 300a of Fig. 3a.

It is further to be appreciated that the windings configurations 350a, 350b, for the three speed and four speed configurations, although different from each other, can be accommodated by the same stator plate 120. The teeth 1, 2, 3, ... , 10 of the stator plate 120 can support each of the windings configurations 350a, 350b.

The stator plates 120 disclosed herein can be used in devices of more than one speed; e.g. having variable windings configurations 350a, 350b; rotors 210a, 210b; respective portions (160a, 160b, 160c, 160x, 160y) of the stator plate for fastening; and/or openings 150a, 150b, 150c, 150x, 150y for fastening. For example, a user may use the same stator plate 120 for two different machines, one a three speed resolver 300a, and the other a four speed resolver 300b.

The stator plates 120 of a resolver 200a, 200b can deform, e.g. due to thermal expansion and contraction. Angular positions midway between the selected openings used for attachment can deform relative to the stator plate positions at the openings which are directly fastened. Deformations of the stator plate(s) can lead to offsets and/or errors in the angular measurements of the resolver. Significant error can be possible when, for example, the symmetry of the attachment points matches that of the rotor and/or speed of the device.

The measurement error can be reduced when using different fixation points, e.g. using the plate 120 with the first set 150b, 150c, 150x, 150y of openings in a three speed configuration (e.g. using the three-lobed rotor 210a or 410a). The first set 150b, 150c, 150x, 150y of openings can be specifically configured for a three speed configuration and/or three-lobed rotor 210a, 410a.

A stator plate 120 can also include a second set 150a, 150b, 150c of openings for a different speed configuration than the first set 150b, 150c, 150x, 150y.

The angular distribution of the entire group of openings (including the first and second sets) can be angularly asymmetric around the center of the stator plate. For example, the angles between neighboring openings, with respect to the center of the stator plate 120, can include a first angle and second angle which are unequal. A stator plate 120, for example that of Fig. 1, can have angles between openings of 120° and 60° (within the angular tolerance described herein). For example, the angles between openings 150x and 150b may be approximately 60°, and the neighboring openings of openings 150b and 150c can be 120° (within the angular tolerance described herein, respectively).

As appreciated in the example of Figs. 2a and 2b, the first set 150b, 150c, 150x, 150y and second set 150a, 150b, 150c may share at least one common opening 150b, 150c. Indeed, two common openings 150b, 150c or more are possible. For example, a stator plate 120 can have two or more common openings 150b, 150c that are spaced apart by 120° or less. As in the example of a stator plate 120 illustrated in Figs. 1, 2a, and 2b, there may be exactly two common openings 150b, 150c, of the first and second sets, which are spaced apart by 120°.

The openings of the first set 150b, 150c, 150x, 150y can be symmetric about a virtual reflection plane 490 which is perpendicular to the stator plate (e.g. the first set 150b, 150c, 150x, 150y at the corners of a virtual rectangle); and the openings of the second set 150a, 150b, 150c can include at least one opening 150a at an intersection of the virtual reflection plane 490 and the stator plate (e.g. exactly one opening at the intersection). The virtual reflection plane 490 can intersect a geometric center of the plate and/or aperture of the plate. Alternatively/additionally, the first set 150b, 150c, 150x, 150y has an even number of openings.

The openings for fasteners, described herein, can be holes extending through the stator plate, such as through ears 580 (see Fig. 1) of the stator plate 120 that project radially outwardly from a body 101 of the stator plate 120.

Fig. 1 shows a stack 110 of stator plates 120, according to embodiments. The stack 110 of stator plates 120, such as that of Fig. 1, can have ears 580 which project radially outwardly from a body 101 of each stator plate 120. The stator plates 120 of the stack 110 can have openings 150a, 150b, 150c, 150x, 150y in each of the ears 580, for the insertion of fasteners. Each opening 550a, 550b, 550c, 550d can be through a corresponding ear 580, as is seen in Figs. 1, 2a, and 2b, for example.

A stator plate 120 can have an aperture 130 in the body 101 of the stator plate 120. The aperture 130 can be formed in the body 101 of the stator plate 120. The stator plate 120 can have teeth 570, e.g. to support windings, which can project radially inwardly, e.g. into the aperture 130.

Teeth 570 can support multiple windings configurations, e.g. first and second windings configurations, e.g. for a first speed configuration and a second speed configuration of a resolver, respectively.

Referring to Fig. 1 as an illustration, the openings 150a, 150b, 150c, 150x, 150y of the stack 110 of stator plates 120 can be aligned. The aligned openings 150a, 150b, 150c, 150x, 150y of the stack 110 are selectable, configured for the insertion of fasteners, for fixing a respective portion 160a, 160b, 160c, 160x, 160y of the stack 110. A stator assembly 100, as illustrated in Fig.1, can have a stack of the stator plates 120, as described herein. The aligned openings 150 can include the first set 150b, 150c, 150x, 150y configured for the first speed configuration, and the second set 150a, 150b, 150c configured for the second speed configuration.

Alternatively/additionally, the respective portions (160a, 160b, 160c, 160x, 160y) of the stack 110 of stator plates 120 are aligned, e.g. for fastening of each respective portion (160a, 160b, 160c, 160x, 160y) of each stator plate 120 of the stack with a fastener.

A resolver 200a, 200b, e.g. those illustrated in Figs. 2a and 2b, can be formed from a stator assembly 100, e.g. by attaching the stator assembly via selected openings (150b, 150c, 150x, and 150y) or (150a, 150b, and 150c) to an electrical device. Alternatively or additionally, a resolver 200a, 200b can be formed (e.g. from a stator assembly 100) by fastening selected respective portions (160b, 160c, 160x, 160y) or (160a, 160b, 160c) to an electrical device. A resolver 200a, 200b can determine the angular position, speed, and/or velocity of a rotating mechanism of the electrical device, and may furthermore be communicatively coupled, e.g. to the same or a second electrical device, e.g. for the transmission of electromagnetic signals. The rotating mechanism may include a rotor 210a, 210b, e.g. that couples to the electromagnetic fields near the stator assembly 100 of the resolver 200a, 200b. The rotor 210a, 210b can be part of the resolver 200a, 200b.

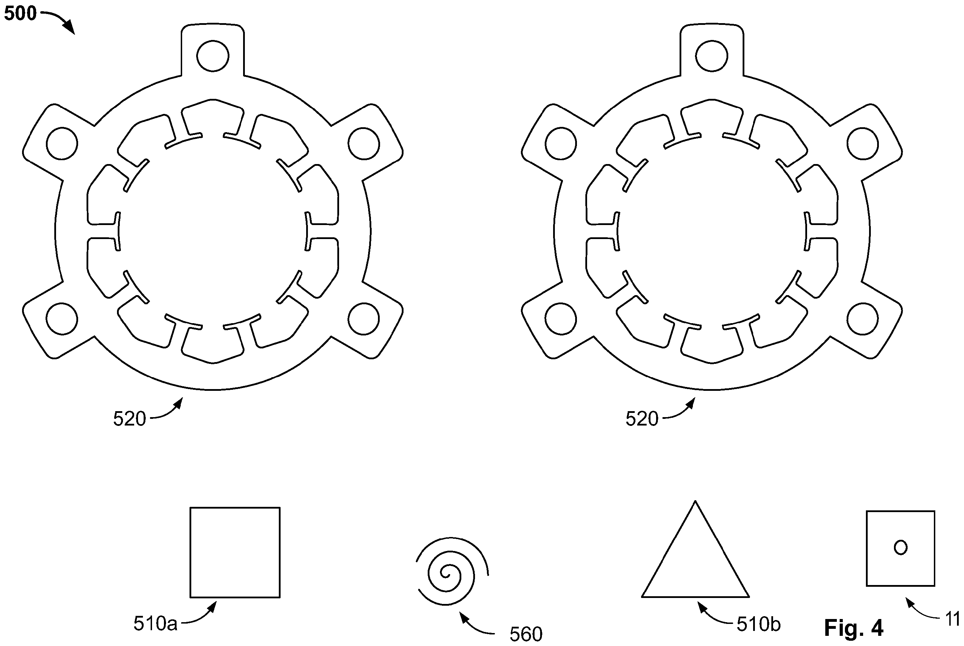

Fig. 4 shows a kit for assembling a resolver, according to an embodiment. A kit 500 for assembly of a resolver 200a, 200b can include a plurality of stator plates 520, the plates being according to any embodiment described herein; at least one wire 560 for forming at least one windings configuration 350a, 350b; and at least one rotor 510a, 510b. The kit 500 can be used to make different speed devices, such as three or four speed resolvers 200a, 200b. The windings configuration 350a, 350b and rotor 510a, 510b can be determined by the user for making a resolver 200a, 200b in a first speed configuration (e.g. three speed) or a second speed configuration (e.g. four speed). For example, the first speed configuration can use a three lobed rotor 510a included in the kit 500; and the second speed configuration can use a four lobed rotor 510b included in the kit 500. A kit 500 can be provided without wire 560.

Fig. 4 also shows, schematically, a device 11 (not to scale) to which the stator plates 520 can be attached, e.g. for forming a resolver for measuring rotational parameters, such as angular position, of a rotating member of the device 11.

Further contemplated is providing a plurality of fiducial marks on the stator plates 120, stator assembly 100, and/or resolvers 200a, 200b described herein. The fiducial marks can show which openings to use for fastening, for the possible configurations of the stator assembly 100 and/or resolver. Alternatively/additionally, the fiducial marks can show which respective portions (160b, 160c, 160x, 160y) or (160a, 160b, 160c) of the stator plate(s) to fasten for a possible configuration of the stator assembly 100 and/or resolver. The fiducial marks may be, for example, the reference numerals used herein, e.g. 150a, 150b, 150c, 150x, 150y. The indicators can indicate the openings that should be directly fastened for a configuration of a first speed resolver or a second speed resolver.

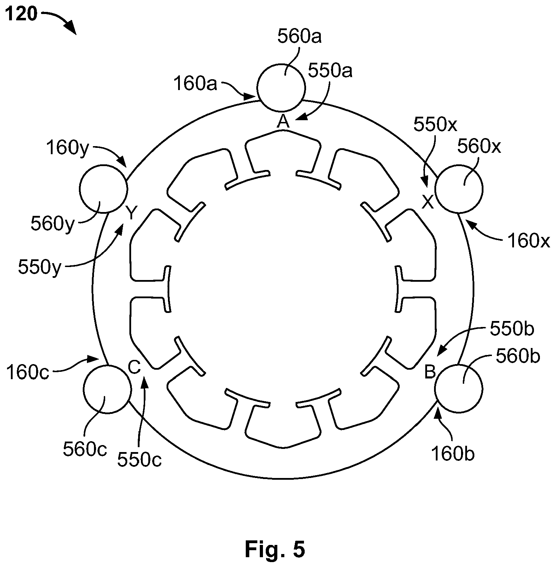

Fig. 5 shows a stator plate, according to an embodiment that may be combined with any other embodiment described herein. A stator plate 120, such as that shown in Fig. 5 can include a plurality of fiducial marks 550a, 550b, 550c, 550x, 550y (the fiducial marks are the letters A, B, C, X, and Y which can be imprinted onto the stator plate, and they are referred to with the reference numerals 550a, 550b, 550c, 550x, 550y). The fiducials can be printed and/or stamped, for example. For example, a first set of fiducials 550x, 550y, 550b, 550c are placed respectively near respective portions 160x, 160y, 160b, 160c of the stator plate 120 for fastening, according to a first speed configuration 300a. For example, a second set of fiducials 550a, 550b, 550c placed near openings 150a, 150b, 150c can indicate the placement of fasteners for a second speed configuration 300b.

A stator plate can include multiple sets of fiducials, each set for indicating the placement of fasteners for a respective speed configuration of a resolver. Each respective speed configuration includes at least one speed.

For example, a first set 550x, 550y, 550b, 550c and second set 550a, 550b, 550c of fiducials, such as that shown in Fig. 5, can be on the stator plate 120 in addition to, or alternatively to, the first and second set of openings as described herein.

The fiducial marks 550a, 550b, 550c, 550x, 550y on the stator plate 120 can indicate to a user where to place fasteners 560a, 560b, 560c, 560x, 560y, e.g. at the respective selectable portions 160a, 160b, 160c, 160x, 160y. Fasteners 560a, 560b, 560c, 560x, 560y can be selectively placed on the outer edge of the stator plate. Alternatively/additionally, the fiducial marks 550a, 550b, 550c, 550x, 550y can be placed on ears 180 to indicate to a user that the fasteners can be placed on an edge of an ear 180, e.g. the outermost edge of an ear. Fasteners can be placed at or through openings as described herein, e.g. through notches at the outer edge of the plate 120.

Fiducial marks 550a, 550b, 550c, 550x, 550y may be used to indicate which openings 150a, 150b, 150c, 150x, 150y to use for a desired speed configuration, e.g. when the stator plate has sets of openings for different speed configurations.

The stator plate 120 of Fig. 5 has a plurality of fiducial marks 550a, 550b, 550c, 550x, 550y which indicate the selectable placement of fasteners.

A stator plate assembly, such as any described herein, can use a stack of stator plates that includes one or more plate with fiducials.

The stator assemblies 100 described herein may include a plastic overmold. The stator plates 120 described herein may include ferromagnetic steel, e.g. be made from a sheet of ferromagnetic steel, e.g. by stamping. The stator assemblies 100 described herein can be electromagnetically coupled, such as via reluctance, to a selected rotor for determining at least one of angular position, angular velocity, or angular speed of the selected rotor, such as by variations of magnetic reluctance due to variations in the orientation of the rotor 210a, 210b within the stator assembly 100.

Herein, fasteners can go through the openings of the stator plates 120, and fix a respective portion of the stator plate 120 and/or stack 110 of plates 120 to an electrical device. The openings 150 can be selectable for a desired speed configuration, e.g. by accommodating a selected rotor 210a, 210b in the aperture 130 of a stator plate 120.

Herein positions of openings, fasteners, positions for fixation, positions for fasteners, and/or positions of fiducial marks may be described. Angular tolerances for all positions described herein for such positions can be within ±15°, ±10°, ±5°, or ±2°, e.g. around the center of the stator plate and/or aperture thereof. The angle can be with respect to a geometric center of the stator plate and/or aperture thereof, and can be a relative angle with respect to the positions of other respective openings, fasteners, positions for fixation, positions for fasteners, and/or positions of fiducial marks. For example, openings for fasteners which are described as being symmetric about a virtual reflection plane can be within ±15°, ±10°, ±5°, or ±2°; for example, openings placed at an intersection of a virtual reflection plane and stator plate can be within ±15°, ±10°, ±5°, or ±2°; for example, openings placed at corners of a rectangle can form a quadrilateral having vertices that are not exactly 90°, e.g. such that the angular positions of the openings, with respect to the center of the stator plate and/or aperture thereof, have angular tolerances of ±15°, ±10°, ±5°, or ±2° of forming a rectangle.

The examples described herein are for illustrative purposes.

### REFERENCE NUMERALS

- 11: device
- 100: stator assembly
- 101: body
- 110: stack of stator plates
- 120: stator plate
- 130: aperture
- 150a, b, c, x, y: openings
- 160a, b, c, x, y: respective (angular) portions of the stator plate and/or stack
- 170: teeth
- 180: ears
- 200a: resolver
- 200b: resolver
- 210a: 3 lobed rotor
- 231: first lobe
- 232: second lobe
- 233: third lobe
- 250a b c x y: openings
- 210b: 4 lobed rotor
- 241: first lobe
- 242: second lobe
- 243: third lobe
- 244: fourth lobe
- 300a: schematic of a three speed resolver
- 300b: schematic of a four speed resolver
- 350a: winding configuration for three speed resolver
- 350b: winding configuration for a four speed resolver
- 1: tooth for winding
- 2: tooth for winding
- 3... 10: teeth for windings
- 360a: windings at teeth 1 and 2
- 360b: windings at teeth 1 and 2
- 500: kit
- 520: plates
- 560: wire
- 510a: rotor
- 510b: rotor
- 550a: fiducial mark
- 550b: fiducial mark
- 550c: fiducial mark
- 550x: fiducial mark
- 550y: fiducial mark
- 560a: fastener
- 560b: fastener
- 560c: fastener
- 560x: fastener
- 560y: fastener

## Claims

1. A stator plate (120) configured to be used for at least two speed configurations (300a, 300b), comprising:
a plurality of openings (150a, 150b, 150c, 150x, 150y) for insertion of fasteners, for fixing respective portions (160a, 160b, 160c, 160x, 160y) of the stator plate (120) to an electrical device; wherein
the openings are selectable, dependent on a speed configuration (300a, 300b); wherein the openings (150a, 150b, 150c, 150x, 150y) include:
a first set (150b, 150c, 150x, 150y) configured for a first speed configuration (300a), and
a second set (150a, 150b, 150c) configured for a second speed configuration (300b); wherein
the first and second sets are different.

2. The stator plate (120) of claim 1, wherein
the first speed configuration (300a) is a three speed configuration, a five speed configuration, or a seven speed configuration; and the second speed configuration (300b) is a two speed configuration, or a four speed configuration, or a six speed configuration, or an eight speed configuration.

3. The stator plate (120) of claim 1 or 2, wherein:
the first set (150b, 150c, 150x, 150y) is configured for accommodating a first rotor (210a); and
the second set (150a, 150b, 150c) is configured for accommodating a second rotor (210b) having a different number of lobes (231, 232, 233, 241, 242, 243, 244) than the first rotor (210a); wherein optionally
the first set (150b, 150c, 150x, 1507y) is configured for a three lobed rotor (210a) and the second set (150a, 150b, 150c) is configured for a four lobed rotor (210b).

4. The stator plate (120) of any one of claims 1-3, further comprising:
a plurality of teeth (570) for supporting a first windings configuration (350b) and a second windings configuration (350a); wherein
the first windings configuration (350b) is for the first speed configuration (300a) and
the second windings configuration (350a) is for the second speed configuration (300b).

5. The stator plate (120) of any one of claims 1-4, wherein
the openings (150a, 150b, 150c, 150x, 150y) include at least one common opening (150b, 150c) which is included in each of the first set (150b, 150c, 150x, 150y) and the second set (150a, 150b, 150c); wherein optionally
the at least one common opening (150b, 150c) is at least two common openings (, 150b, 150c) which are spaced apart by 120° or less angularly around the center of the stator plate (120).

6. The stator plate (120) of any one of claims 1-5, wherein
the angular distribution of the openings (150a, 150b, 150c, 150x, 150y) is angularly asymmetric around the center of the stator plate (120), wherein
the angles between neighboring openings, with respect to the center, include a first angle and second angle which are unequal.

7. The stator plate (120) of any one of claims 1-6, wherein
the openings of the first set (150b, 150c, 150x, 150y) are symmetrically positioned, within an angular tolerance, about a virtual reflection plane (490) which is perpendicular to the stator plate and intersects a geometric center of the stator plate and/or an aperture thereof; and
the openings of the second set (150a, 150b, 150c) include at least one opening (150a) at an intersection, within the angular tolerance, of the virtual reflection plane (490) and the stator plate (120); wherein
the angular tolerance is ±15°, ±10°, ±5°, or ±2° around the center of the stator plate and/or the aperture thereof; wherein optionally
the first set (150b, 150c, 150x, 150y) has an even number of openings;
the first set (150b, 150c, 150x, 150y) has openings placed at the corners of a virtual rectangle, within the angular tolerance; and
the at least one opening (150a), at the intersection, within the angular tolerance, is one opening.

8. The stator plate (120) of any one of claims 1-7, wherein
the openings (150a, 150b, 150c, 150x, 150y) are holes extending through the stator plate (120).

9. The stator plate (120) of any one of claims 1-8, further comprising:
an aperture (130) in a body (101); and
a plurality of ears (580) which project radially outwardly from the body (101); wherein each of the openings (150a, 150b, 150c, 150x, 150y) are through a corresponding ear (580).

10. A stator plate (120), configured to be used for at least two speed configurations (300a, 300b), comprising:
a plurality of fiducial marks (550a, 550b, 550c, 550x, 550y) for indicating respective portions (160a, 160b, 160c, 160x, 160y) of the stator plate (120) for fixing to an electrical device; wherein
the respective portions (160a, 160b, 160c, 160x, 160y), for fixing, are selectable, dependent on a speed configuration (300a, 300b); wherein
the fiducial marks (550a, 550b, 550c, 550x, 550y) and respective portions (160a, 160b, 160c, 160x, 160y) each include:
a first set (550b, 550c, 550x, 550y; 160b, 160c, 160x, 160y) configured for a first speed configuration (330a), and
a second set (550a, 550b, 550c; 160a, 160b, 160c) configured for a second speed configuration (330b); wherein
the first and second sets are different.

11. The stator plate (120) of claim 10, wherein
the first speed configuration (300a) is a three speed configuration, a five speed configuration, or a seven speed configuration; and the second speed configuration (300b) is a four speed configuration, or a six speed configuration, or an eight speed configuration.

12. The stator plate (120) of claim 10 or 11, wherein
the first set (550b, 550c, 550x, 550y; 160b, 160c, 160x, 160y) is configured for accommodating a first rotor (210a); and
the second set (550a, 550b, 550c; 160a, 160b, 160c) is configured for accommodating a second rotor (210b) having a different number of lobes (231, 232, 233, 241, 242, 243, 244) than the first rotor (210a); wherein optionally
the first set (550b, 550c, 550x, 550y; 160b, 160c, 160x, 160y) is configured for a three lobed rotor (210a) and
the second set (550a, 550b, 550c; 160a, 160b, 160c) is configured for a four lobed rotor (210b).

13. A stator assembly (100), comprising:
a stack (110) of the stator plates (120) according to any one of claims 1-12, wherein
the respective portions (160a, 160b, 160c, 160x, 160y) of the stator plate (120) of the stator plates (120) are aligned and the stator assembly (100) is configured for at least one of:
selectably fixing the first set (160a, 160b, 160x, 160y) or the second set (160a, 160b, 160c) of the respective portions (160a, 160b, 160c, 160x, 160y) to the electrical device; or
selectably fixing the first set (150a, 150b, 150x, 160y) or the second set (150a, 150b, 150c) of the openings (150a, 150b, 150c, 150x, 150y) to the electrical device.

14. A resolver (200a, 200b), comprising:
the stator assembly (100) according to claim 13;
a rotor (210a, 210b), and
a windings configuration (350a, 350b); wherein, at least one of:
i - the stator assembly (100) is fastened by using one of the first set (150b, 150c, 150x, 150y) or the second set (150a, 150b, 150c) of openings; wherein the fastened openings depend on the speed configuration (300a, 300b) of the resolver (200a,200b); or
ii - the stator assembly (100) is fastened by using one of the first set (550b, 550c, 550x, 550y; 160b, 160c, 160x, 160y) or the second set (550a, 550b, 550c; 160a, 160b, 160c) of fiducial marks and respective portions; wherein the fastened respective portions depend on the speed configuration (300a, 300b) of the resolver (200a, 200b).

15. A kit (500) for assembling a resolver (200a, 200b), comprising:
a plurality of stator plates (520) according to any one of claims 1-12; and
at least one rotor (510a, 510b); wherein
the kit (500) is configured for assembling a resolver (200a, 200b) having a first speed (300a) or a second speed (300b); wherein
the stator plates (520) are configured to be assembled with the least one rotor (510a, 510b) for assembling a first speed resolver (200a) or a second speed resolver (200b); wherein
at least one of:
i - the first set (150b, 150c, 150x, 150y) of openings are configured to be used for the first speed resolver (200a), and
the second set (150a, 150b,150c) of openings are configured to be used for the second speed resolver (200b); or
ii - the first set (550b, 550c, 550x, 550y; 160b, 160c, 160x, 160y) of fiducial marks and respective portions are configured to be used for the first speed resolver (200a), and
the second set (550a, 550b, 550c; 160a, 160b, 160c) of fiducial marks and respective portions are configured to be used for the second speed resolver (200b).
